**Europäisches Patentamt**

**European Patent Office**

**Office européen des brevets**

(19)

(11) **EP 0 933 618 A1**

## (12) DEMANDE DE BREVET EUROPEEN

(43) Date de publication:
04.08.1999 Bulletin 1999/31

(51) Int. Cl.$^6$: **G01D 5/241**, G01B 7/30

(21) Numéro de dépôt: 98400199.0

(22) Date de dépôt: 30.01.1998

(84) Etats contractants désignés:
AT BE CH DE DK ES FI FR GB GR IE IT LI LU MC
NL PT SE
Etats d'extension désignés:
AL LT LV MK RO SI

(71) Demandeur:
MAGNETI MARELLI FRANCE
F-92000 Nanterre (FR)

(72) Inventeur: **Marteau, Bernard**
78330 Fontenay le Fleury (FR)

(74) Mandataire: **Texier, Christian**
**Cabinet Regimbeau,**
**26, Avenue Kléber**
**75116 Paris (FR)**

(54) **Dispositif de mesure capacitif**

(57) La présente invention concerne un dispositif de mesure capacitif comprenant un capteur capacitif (10) comportant deux ensembles d'électrodes (20, 30) séparés par un milieu (40) de propriétés diélectriques évolutives en fonction d'une grandeur à mesurer et un système électronique (100) comportant des moyens de commande (110, 130, 140) aptes à appliquer des signaux électriques contrôlés d'entrée (SECT1, SECT2, SECT3, SECT4) sur les électrodes (20) et des moyens de détection (150, 160, 170, 180, 190, 200) aptes à mesurer un signal électrique de sortie résultant et à exploiter celui-ci pour déterminer une valeur représentative de ladite grandeur à mesurer, caractérisé par le fait que les moyens de commande (110, 130, 140) sont conçus pour générer des signaux électriques contrôlés découplés par un signal d'horloge et par le fait que les moyens de détection (150 à 200) sont conçus pour opérer une détection synchrone avec le signal d'horloge.

FIG.8

**Description**

La présente invention concerne le domaine des capteurs capacitifs.

La présente invention s'applique en particulier, mais non exclusivement, aux capteurs capacitifs d'angle ou aux capteurs capacitifs de niveau de liquide, par exemple de carburant, pour véhicules automobiles.

On a déjà proposé de nombreux capteurs capacitifs pour diverses applications.

On pourra se référer par exemple aux documents FR-A-2234555, FR-A-2402193, FR-A-2451024, FR-A-2500169, FR-A-2500337, FR-A-2647898, FR-A-2647899 et FR-A-2647900, pour ce qui est des capteurs capacitifs de niveau de liquide.

On pourra également se référer aux documents EP-A-0551066, DE-A-3711062, US-A-4238781, DE-A-3328421, EP-A-0459118, GB-A-2176013, US-A-3732553, US-A-3845377 et FR-A-2457003, pour ce qui est des capteurs capacitifs d'angle.

Pour l'essentiel, le document EP-A-0551066 décrit un capteur d'angle comprenant un dispositif mécanique constitué par deux armatures fixes et une pièce mobile : une première armature fixe globalement circulaire divisée en plusieurs secteurs angulaires et une seconde armature fixe circulaire qui couvre les différents secteurs de la première armature, ainsi qu'une armature mobile en rotation autour de l'axe de la première et de la deuxième armatures, située entre celles-ci et qui correspond par exemple à deux secteurs de la première armature. Le capteur décrit dans ce document comprend en outre un dispositif électronique adapté pour appliquer des niveaux de tension contrôlés successivement sur différents secteurs de la première armature fixe, comme illustré sur la figure 4 du document EP-A-0551066, mesurer un niveau de tension résultant sur la seconde armature fixe, puis déduire l'angle de l'armature mobile.

Les dispositifs décrits dans les documents précités, bien qu'ayant rendu de grands services, ne donnent pas totalement satisfaction. En particulier, d'une façon générale, ils s'avèrent très sensibles aux parasites.

Le but de la présente invention est par conséquent de perfectionner les capteurs capacitifs connus.

Ce but est atteint dans le cadre de la présente invention grâce à un dispositif de mesure capacitif comprenant un capteur capacitif comportant deux ensembles d'électrodes séparés par un milieu de propriétés diélectriques évolutives en fonction d'une grandeur à mesurer et un système électronique qui comporte des moyens de commande aptes à appliquer des signaux électriques contrôlés d'entrée sur les électrodes et des moyens de détection aptes à mesurer un signal électrique de sortie résultant et à exploiter celui-ci pour déterminer une valeur représentative de ladite grandeur à mesurer,

caractérisé par le fait que les moyens de commande sont conçus pour générer des signaux électriques contrôlés découpés par un signal d'horloge et par le fait que les moyens de détection sont conçus pour opérer une détection synchrone avec le signal d'horloge.

D'autres caractéristiques, buts et avantages de l'invention apparaîtront à la lecture de la description détaillée qui va suivre, et en regard des dessins annexés, donnés à titre d'exemple non limitatif et sur lesquels :

-    la figure 1 représente une vue schématique en perspective d'un capteur capacitif connu conforme au document EP-A-0551066, auquel peut s'appliquer la présente invention,

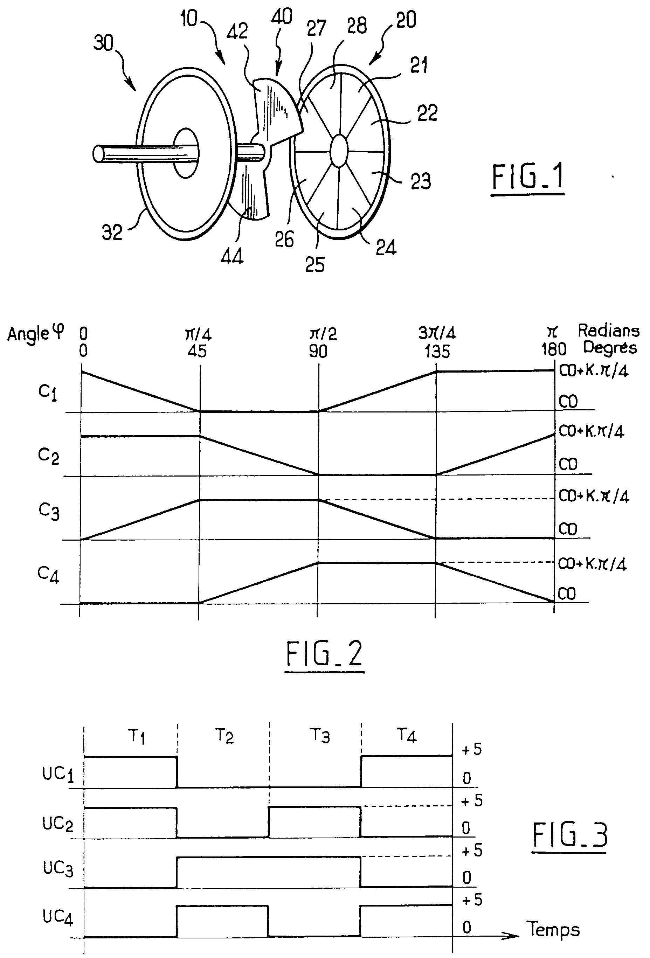

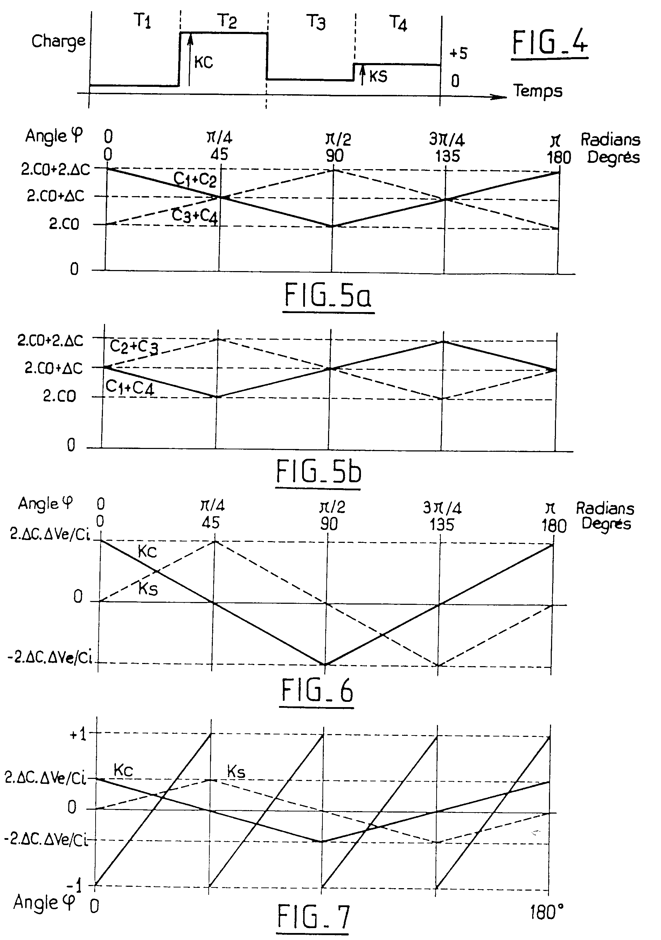

-    les figures 2 à 7 représentent différents signaux liés à ce capteur, plus précisément : la figure 2 représente l'évolution de capacités individuelles de ce capteur en fonction de l'angle de rotation d'une armature mobile, la figure 3 représente des signaux électriques d'entrée appliqués aux électrodes de ce capteur, la figure 4 représente le signal de sortie mesuré sur l'une des électrodes de ce capteur, les figures 5a et 5b représentent l'évolution de la somme de deux des capacités individuelles en fonction de l'angle de rotation et les figures 6 et 7 représentent l'évolution de paramètres de calcul en fonction de l'angle de rotation,
-    la figure 8 représente le schéma général d'un circuit de commande et d'un circuit de détection conforme à la présente invention,
-    la figure 9 représente le schéma d'une logique conforme à la présente invention, et
-    les figures 10, 11, 12 et 13 représentent différents signaux prélevés sur le circuit conforme à la présente invention.

La présente invention concerne un dispositif de mesure capacitif comprenant un capteur capacitif et un sytème électronique, dans lequel le capteur capacitif comporte deux ensembles d'électrodes séparés par un milieu de propriétés diélectriques évolutives en fonction d'une grandeur à mesurer et le système électronique comporte des moyens de commande aptes à appliquer des signaux électriques contrôlés d'entrée sur les électrodes et des moyens de détection aptes à mesurer un signal électrique de sortie résultant et à exploiter celui-ci pour déterminer une valeur représentative de ladite grandeur à mesurer.

Comme indiqué précédemment, le capteur capacitif conforme à la présente invention peut constituer un détecteur de niveau de fluide, par exemple un détecteur de carburant dans un réservoir de véhicule automobile. Dans ce cas, les électrodes sont de préférence fixes et le milieu diélectrique évolutif est constitué par le liquide lui-même qui pénètre librement entre les électrodes. On peut prévoir par exemple un premier ensemble d'électrodes formé de différentes plages électriquement isolées superposées verticalement et sur lesquelles sont appliqués les signaux d'entrée et un second ensemble d'électrode constitué d'une électrode unique placée en regard des plages précitées pour recouvrir celles-ci, et sur laquelle est prélevé le signal de sortie.

Selon une autre variante, la présente invention s'applique aux capteurs capacitifs d'angle tels que décrits par exemple dans le document EP-A-0551066, ou encore dans les documents DE-A-3711062, US-A-4238781, DE-A-3328421, EP-A-0459118, GB-A-2176013, US-A-3732553, US-A-3845377 et FR-A-2457003.

On a ainsi illustré sur la figure 1 annexée, la structure générale d'un capteur capacitif auquel peut s'appliquer la présente invention.

Ce capteur capacitif 10 est formé de deux armatures fixes 20, 30 et d'une pièce mobile 40. La première armature fixe 20 est divisée en plusieurs secteurs angulaires électriquement conducteurs coplanaires équirépartis autour de l'axe de rotation de la pièce mobile 40, par exemple huit secteurs angulaires, reliés électriquement par paires diamétralement opposées. Ces secteurs sont référencés 21 à 28 sur la figure 1. Ils reçoivent, par paire, des signaux électriques d'entrée.

L'armature réceptrice électriquement conductrice 30 est circulaire, plane et parallèle à l'armature 20 et recouvre les secteurs précités 21 à 28. L'armature réceptrice fixe 30 est de préférence entourée par un anneau de garde 32.

La pièce mobile 40 est intercalée entre les armatures fixes 20, 30. Elle est entraînée à rotation autour de son axe par tout moyen approprié. La pièce mobile 40 comporte au moins un secteur parallèle aux armatures 20 et 30, apte à recouvrir plusieurs secteurs de la première armature 20, par exemple deux secteurs de celle-ci. Selon le mode de réalisation particulier, la pièce mobile 40 comporte deux secteurs 42, 44, en matériau électriquement conducteur, diamétralement opposés et reliés entre eux recouvrant chacun deux secteurs 21 à 28 de la première armature 20.

Cet ensemble mécanique représente électriquement quatre capacités variables en fonction de l'angle de rotation de la pièce mobile 40 et ayant une armature commune. Plus précisément, ces quatre capacités variables sont réalisées entre l'armature commune 30 et l'une des paires de secteurs 21 à 28 de la première armature 20.

On a illustré sur la figure 2, la courbe de variation des quatre capacités ainsi formées en fonction de l'angle de rotation de la pièce mobile 40.

Selon l'état de la technique, ces quatre capacités C1, C2, C3 et C4 sont attaquées par une suite de quatre niveaux continus de tension UC1, UC2, UC3, UC4 tels qu'illustrés sur la figure 3 et décrits par exemple dans le document EP-A-0551066.

Le point commun 30 des quatre capacités entre sur un circuit de détection apte à exploiter le niveau de tension présent sur l'électrode 30 pour déterminer une valeur représentative de l'angle de pivotement de la pièce mobile 40 par rapport à une position de référence.

Le circuit de détection peut comporter par exemple un amplificateur de charges dont l'entrée est reliée à l'électrode commune 30 et qui génère à sa sortie une suite de niveaux dépendants des signaux d'entrée appliqués aux électrodes 21 à 28. La sortie de l'amplificateur de charges peut être reliée par exemple à un convertisseur analogique-numérique.

La figure 4 représente un exemple du signal de sortie d'un tel amplificateur de charges dans le cas où les signaux d'entrée attaquent les capacités par paires : pendant les temps T1 et T2, les capacités C1 et C2 sont reliées et reçoivent un front descendant tandis que les capacités C3 et C4 reliées entre elles reçoivent un front montant, tandis que pendant les temps T3 et T4, les capacités C2 et C3 sont reliées pour recevoir un front descendant et les capacités C1 et C4 sont reliées pour recevoir un front montant.

Ainsi, suite aux évolutions des signaux de commande d'entrée, l'amplificateur de charges délivre successivement quatre niveaux A, B, C et D (visibles sur la figure 4) qui permettent de calculer, d'une part un pseudo-cosinus KC = B - A et un pseudo-sinus KS = D - C .

On a illustré sur les figures 5a et 5b, les courbes d'évolution des sommes de capacités C1 + C2, C3 + C4, d'une part, et C2 + C3 et C1 + C4 d'autre part, groupées par paires, en fonction de l'angle de rotation de la pièce mobile 40.

La figure 6 représente la courbe d'évolution des variables KC et KS en fonction de l'angle de rotation.

L'homme de l'art comprendra à l'examen de la figure 6 que le signe des variables KC et KS permet de connaître le secteur dans lequel se situe la pièce mobile 40. Par ailleurs, les signaux KC et KS permettent d'obtenir une variation linéaire de l'angle, par calcul, par exemple :

- pour le premier secteur de 0 à 45° en utilisant la fonction

$$1 \text{-+-} [(KS \text{ -} KC) / (KC + KS)],$$

- pour le second secteur de 45 à 90° en utilisant la fonction

$$3 + [(KS + KC) / (KC - KS)],$$

- pour le troisième secteur de 90 à 135° en utilisant la fonction

$$5 + [(KS - KC) / (KC + KS)],$$

- pour le quatrième secteur de 135 à 180° en utilisant la fonction

$$7 + [(KS + KC) / (KC-KS)].$$

Les courbes correspondantes sont illustrées sur la figure 7 annexée.

En résumé, le calcul de la position angulaire de la pièce mobile 40 par rapport à une référence fixe peut être obtenu :

- par conversion numérique des quatre niveaux analogiques successifs A, B, C et D lus en sortie de l'amplificateur de charges relié à l'électrode commune 30, tel qu'illustré sur la figure 4,
- calcul d'un pseudo-cosinus KC = B -A et d'un pseudo-sinus KS = B - C ,
- détermination du secteur suivant le signe de KC et KS et
- calcul de l'angle dans le secteur considéré avec des expressions correspondant aux fonctions indiquées ci-dessus.

En outre, le cas échéant, le résultat obtenu peut être multiplié par un facteur d'échelle suivant l'unité désirée : degrés, radians....

Bien entendu, l'invention n'est pas limitée à la structure de capteurs capacitifs précitée.

En particulier, dans le cadre de l'invention, la pièce mobile 40 peut être réalisée dans un matériau non électriquement conducteur, mais dans un matériau diélectrique ayant une forte permittivité.

Dans le cadre de l'invention, la pièce mobile 40 peut être isolée de la masse ou non.

Bien entendu, l'invention n'est pas limitée à la géométrie des secteurs illustrés sur la figure 1, tant pour les électrodes fixes que pour les électrodes mobiles.

Enfin, l'invention n'est pas limitée à des secteurs d'électrodes plans mais peut s'appliquer également à des secteurs par exemple cylindriques.

Comme on l'a évoqué précédemment, selon l'invention, les moyens de commande sont conçus pour générer des signaux électriques contrôlés découpés par un signal d'horloge et les moyens de détection sont conçus pour opérer une détection synchrone avec le signal d'horloge. En d'autres termes, selon l'invention, sur la commande des secteurs 21 à 28, on remplace un niveau logique haut de tension par un signal carré en phase avec une horloge de référence, par exemple de l'ordre de 100kHz, tandis que le niveau bas d'attaque des secteurs 21 à 28 est remplacé par un signal carré en opposition de phase par rapport à la même horloge de référence.

Ainsi, on attaque les paires de secteurs 21 à 28 par deux signaux en opposition de phase.

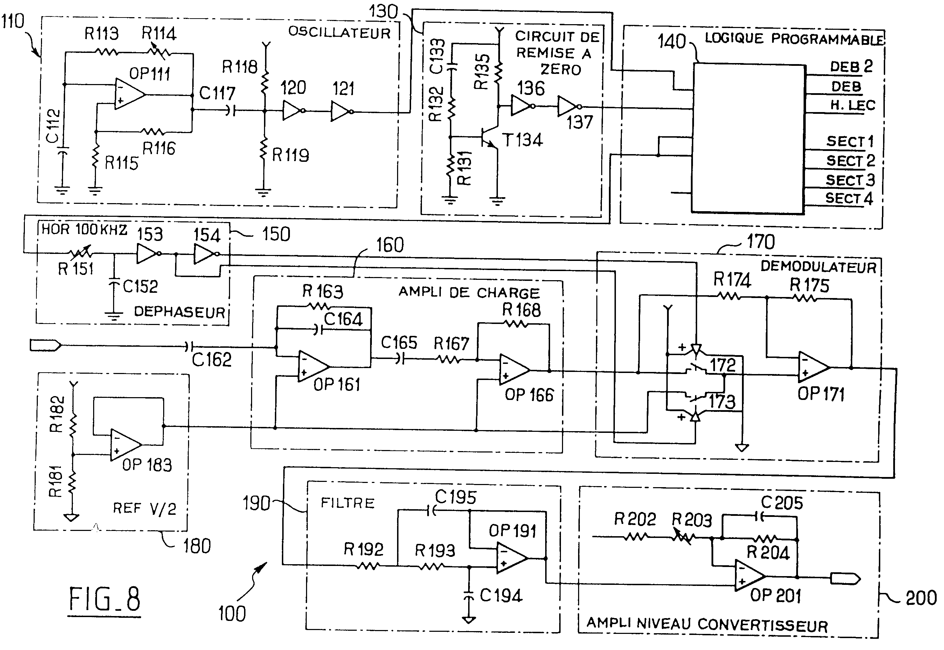

La forme de ces signaux sera explicitée par la suite dans le cadre de la description relative à la figure 8.

Le capteur forme un diviseur capacitif. L'amplitude du signal disponible sur l'électrode commune 30 représente l'angle de rotation de la pièce mobile 40. Le signal résultant disponible sur l'électrode commune 30 est nul si les deux ensembles de capacités recevant les signaux en opposition de phase sont identiques. Au contraire, on obtient sur l'électrode commune 30 un signal dont le sens de la phase dépend du sens de la différence entre les capacités et dont l'amplitude est proportionnelle à cette différence.

Pour détecter le signal obtenu et récupérer la grandeur représentative de la position angulaire de la pièce mobile 40, on multiplie le signal issu de l'électrode commune 30 par le signal d'horloge. De préférence, le signal ainsi obtenu après cette détection synchrone est appliqué à un filtre passe bas qui extrait les composantes lentes du signal. La fréquence de coupure du filtre détermine la largeur de bande détectée.

Plus précisément encore, dans le cadre de la présente invention, plutôt que d'appliquer une multiplication analogique pure, on opère une détection synchrone grâce à un amplificateur dont le gain alternativement positif et négatif, par exemple plus ou moins 1, est commandé par la fréquence du signal d'horloge de référence.

Selon d'autres caractéristiques avantageuses de l'invention :

- le signal d'horloge est un signal carré issu de diviseurs logiques,
- un déphaseur ajustable est intercalé entre la sortie du générateur d'horloge et l'entrée de commande de l'amplificateur à gain variable entre +1 et -1 pour compenser les retards dans la chaîne de mesure, et
- le filtre connecté en sortie du détecteur synchrone est un filtre du deuxième ordre, par exemple d'une constante de temps de l'ordre de $50\mu s$.

De telles dispositions permettent d'obtenir un résultat stable après peu de cycles, typiquement de l'ordre de 32.

On va maintenant décrire la structure d'un circuit particulier de commande et de détection conforme à la présente invention en regard de la figure 8 annexée.

Le circuit 100 de commande et de détection illustré sur la figure 8 annexée comprend un module oscillateur 110, un module de remise à zéro 130, un module de logique programmable 140, un module déphaseur 150, un module amplificateur de charges 160, un module 170 démodulateur et de détection synchrone, un module 180 générant une tension de référence, un module 190 formant filtre et un module 200 d'amplification de niveau avant application à un convertisseur.

Le module oscillateur 110 comprend un amplificateur opérationnel OP111 monté en trigger avec un réseau RC. Plus précisément, l'entrée inverseuse de OP111 est reliée, d'une part à la masse par un condensateur C112 et d'autre part à sa sortie par deux résistances séries R113 et R114, dont l'une au moins réglable pour le réglage de la fréquence d'oscillation. L'entrée non inverseuse de OP111 est reliée, d'une part à la masse par une résistance R115 et d'autre part à sa sortie par une résistance de contre-réaction R116.

Le signal d'horloge ainsi obtenu à la sortie de OP111 est mis en forme par deux portes inverseuses 120, 121 montées en série. La première porte 120 est polarisée à la moitié de la tension d'alimentation par un diviseur résistif R118, R119.

Une capacité de C117 fait la liaison en alternatif entre la sortie de OP111 et l'entrée de la première porte 120.

A titre d'exemple non limitatif l'oscillateur 110 est réglé pour délivrer à la sortie de la porte 121 un signal alternatif à 200kHz. Un tel module oscillateur 110 délivre des fronts de montée très propres.

Le circuit de remise à zéro 130 est conçu pour détecter la mise en service de l'alimentation du circuit et assurer la remise à zéro de la logique programmable 140. Ce circuit 130 est formé d'un monostable dont la temporisation est assurée par un circuit RC et la mise en forme par un transistor T134 suivi de deux portes 136, 137.

Plus précisément, selon la figure 8, le transistor T134 type NPN a sa base polarisée à la masse par une résistance R131 et à la tension d'alimentation positive par une branche comprenant en série une résistance R132 et un condensateur C133.

L'émetteur de C134 est relié à la masse et son collecteur relié à la tension d'alimentation par une résistance R135.

Les deux portes de mise en forme 136, 137 sont formées de portes inverseuses connectées en série, l'entrée de la première porte 136 étant reliée au collecteur du transistor T134.

Le module de logique programmable 140 reçoit en entrée, d'une part le signal de 200kHz issu de l'oscillateur 110 et, d'autre part le signal de remise à zéro issu du module 130.

La logique programmable 140 est conçue pour délivrer à sa sortie des signaux SECT1, SECT2, SECT3, SECT4 destinés à être appliqués respectivement aux secteurs 21 à 28 du capteur capacitif, un signal d'horloge référencé HOR 100kHz sur la figure 8 appliqué au déphaseur 150 pour piloter le démodulateur 170 et dont la fréquence est la moitié de celle du signal issu de l'oscillateur 110, ainsi que des signaux DEB2, DEB et H.LEC assurant la synchronisation de mesure et de calcul dans un processeur.

De préférence, le module de logique programmable 140 est formé à partir d'un réseau PAL.

Le signal HOR 100kHz appliqué à l'entrée du déphaseur 150 est généré par un diviseur par deux de rapport cyclique 1/2.

Les signaux SECT1, SECT2, SECT3 et SECT4 appliqués respectivement aux différents secteurs 21 à 28 du capteur capacitif sont formés de signaux à 100kHz dont la phase est inversée ou non, par rapport au signal de référence, conformément au niveau des signaux de commande classiques illustrés sur la figure 3. C'est-à-dire que les signaux SECT1, SECT2, SECT3, SECT4 sont formés de signaux à 100kHz en phase avec le signal d'horloge pour les niveaux haut illustrés sur la figure 3 et en opposition de phase avec le signal d'horloge pour le niveau bas illustré sur cette figure 3.

En d'autres termes, pour un capteur capacitif comportant quatre capacités variables, la logique programmable 140 génère quatre signaux SECT1, SECT2, SECT3 et SECT4 constitués chacun de cycles divisés en quatre temps T1, T2, T3 et T4, tels que :

- pendant le premier temps T1, les signaux SECT1 et SECT2 correspondent à des créneaux ou impulsions identiques au signal d'horloge et en phase avec celui-ci, tandis que les signaux SECT3 et SECT4 correspondent à des créneaux ou impulsions en opposition de phase avec le signal d'horloge,
- pendant le second temps T2, les signaux SECT1 et SECT2 sont en opposition de phase avec le signal d'horloge, tandis que les signaux SECT3 et SECT4 sont en phase avec le signal d'horloge,
- pendant le troisième temps T3, les signaux SECT2 et SECT3 sont en phase avec le signal d'horloge, tandis que les signaux SECT1 et SECT4 sont en opposition de phase avec le signal d'horloge, et
- pendant le quatrième temps T4, les signaux SECT1 et SECT4 sont en phase avec le signal d'horloge, tandis que les signaux SECT2 et SECT3 sont en opposition de phase avec le signal d'horloge.

Ainsi d'un temps à l'autre, on alterne la phase de l'un au moins des signaux SECT1, SECT2, SECT3 et SECT4. Et pendant chacun de ces quatre temps T1, T2, T3 ou T4, deux des signaux sont en phase avec le signal d'horloge, tandis que les deux autres signaux sont en opposition de phase avec le signal d'horloge.

D'une façon plus générale pour un capteur comprenant i capacités variables, la logique programmable 140 est adaptée pour générer i signaux SECTi divisés en cycles de j périodes de temps (avec par exemple, mais non nécessairement i = j ) ; chacun des i signaux étant constitués de créneaux ou impulsions en phase ou en opposition de phase avec un signal d'horloge, la phase de l'un au moins des signaux étant inversée d'une période j à la période suivante.

Le signal , TH.LEC est adapté pour déclencher une interruption et demander une mesure au convertisseur analogique numérique relié à la sortie du circuit 100. Le signal H.LEC apparaît typiquement au 3/4 d'un cycle.

Le signal DEB est conçu pour synchroniser la première mesure.

Enfin, le signal DEB2 est adapté pour déclencher le début d'un calcul de la grandeur recherchée.

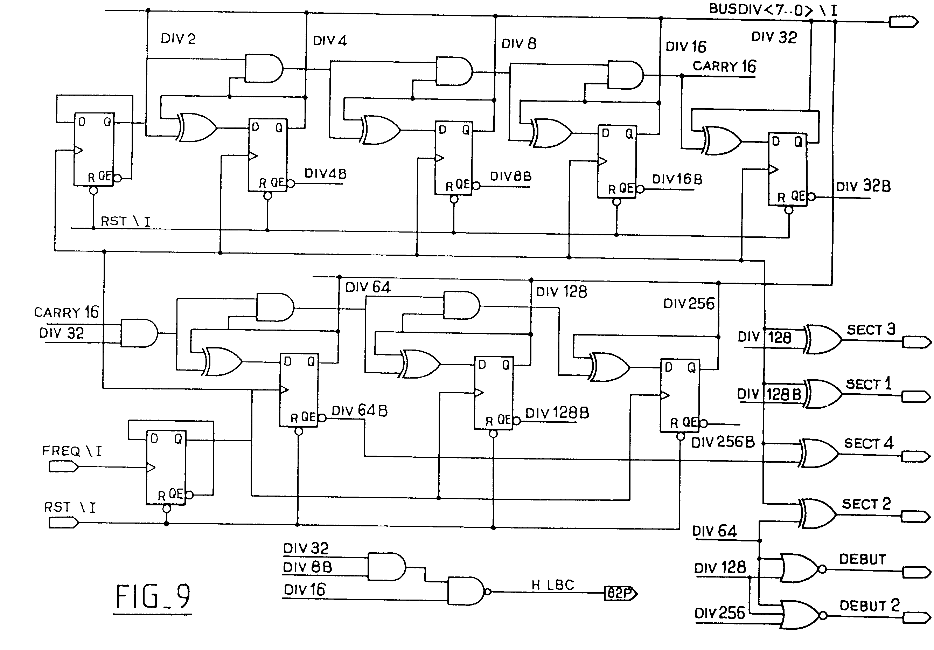

On a illustré sur la figure 9, un exemple de réalisation d'une telle logique programmable 40.

Pour cette raison, la structure de ce circuit 140 ne sera pas décrite plus en détail par la suite.

Le circuit déphaseur 150 est conçu pour générer deux signaux d'horloge à 100kHz (fréquence moitié de la fréquence d'horloge issue de l'oscillateur 110) en opposition de phase, pour piloter le démodulateur 170 formant détecteur synchrone.

Le déphaseur 150 comprend un circuit RC variable constitué d'une résistance variable série R151 et d'un condensateur C152 relié à la masse. Ce circuit RC créée un retard sur l'horloge à 100kHz. Le signal obtenu sur le point commun entre la résistance R151 et le condensateur C152 et ensuite remis en forme par deux inverseurs séries 153, 154. Le réglage de la résistance R151 permet de régler le déphasage.

Les deux signaux pilotes en opposition de phase à 100kHz sont disponibles respectivement sur les sorties des inverseurs 153, 154.

De préférence, les sorties des inverseurs 153, 154 sont reliées aux entrées correspondantes du démodulateur 170 par des paires torsadées pour limiter les émissions parasites.

L'amplificateur de charge 160 est formé de deux étages amplificateurs montés en cascade.

Le premier étage amplificateur est formé d'un amplificateur opérationnel OP161. Celui-ci reçoit sur son entrée non inverseuse une tension égale à la moitié de la tension d'alimentation, issue du module 180. L'entrée inverseuse de OP161 reçoit le signal de sortie du capteur capacitif, c'est-à-dire la tension disponible sur l'électrode commune 30, par l'intermédiaire d'un condensateur de liaison C162. En outre, l'entrée inverseuse de OP161 est reliée à sa sortie par une branche de contre-réaction comprenant en parallèle une résistance R163 et un condensateur C164.

Le gain du premier étage de l'amplificateur de charge 160 est défini par le diviseur capacitif formé par la capacité du capteur et la capacité C164 de contre-réaction de ce premier étage.

Pour ne pas déformer le signal carré qui attaque le circuit, la branche de contre-réaction R163-C164 doit définir une longue constante de temps. A titre d'exemple non limitatif R163 peut être de l'ordre de 10M$\Omega$ et C164 est de l'ordre de 22pF. La résistance R163 est choisie pour que des fuites vers le point milieu soient toujours supérieures aux fuites vers la masse du capteur.

Une capacité de liaison C165 relie les deux étages. Le second étage est articulé autour d'un amplificateur opérationnel OP166. L'entrée non inverseuse de OP166 est reliée à la sortie du module 180 précité. L'entrée inverseuse de OP166 est reliée au condensateur de liaison 165 (lui-même connecté à la sortie de OP161) par l'intermédiaire d'une résistance R167. Enfin, l'entrée inverseuse de OP166 est rebouclée sur sa sortie par une résistance de contre-réaction R168.

A titre d'exemple non limitatif, OP161 peut être de type LM662, présentant l'avantage d'une grande impédance d'entrée et des fuites très faibles.

A titre d'exemple non limitatif, OP166 peut être de type OP283.

Le module 180 est conçu pour générer une "masse décalée" à la moitié de la tension d'alimentation. Le module 180 est formé de préférence d'un pont diviseur résistif R181, R182 branché entre la masse et la tension d'alimentation et dont le point commun attaque l'entrée non inverseuse d'un amplificateur opérationnel OP183 monté en suiveur. A cette fin, l'entrée inverseuse de OP183 est rebouclée directement sur sa sortie. La tension d'alimentation V/2 est disponible à la sortie de OP183.

L'utilisation d'un amplificateur opérationnel OP183 monté en suiveur permet d'assurer une très faible impédance de sortie.

Le démodulateur 170 assurant la fonction de détection synchrone peut faire l'objet de nombreux modes de réalisation.

Le cas échéant, il pourrait être formé d'un interrupteur unique dont les cycles d'ouverture/fermeture sont pilotés par le signal d'horloge appliqué aux secteurs du capteur capacitif.

Cependant, comme indiqué précédemment, dans le cadre de l'invention, le module 170 formant détecteur synchrone est de préférence articulé autour d'un amplificateur opérationnel OP171 associé à deux interrupteurs analogiques 172, 173.

Comme on l'a illustré sur la figure 8, ces interrupteurs analogiques 172, 173 sont pilotés à l'ouverture et à la fermeture respectivement par les signaux à 100kHz en opposition de phase issus du déphaseur 150.

Les entrées des interrupteurs analogiques 172, 173 sont reliées respectivement à la sortie de OP166 et à une borne de référence formée par la sortie du module 180 à V/Z (moitié de la tension d'alimentation).

Les sorties des interrupteurs analogiques 172, 173 sont reliées en commun à l'entrée non inverseuse de OP171.

L'entrée inverseuse de OP171 est reliée par l'intermédiaire d'une résistance R174 à la sortie de OP166. En outre, l'entrée inverseuse de OP171 est rebouclée sur sa sortie par une résistance de contre-réaction R175.

La sortie du démodulateur 170 est disponible sur la sortie de OP171. La structure du module 170 qui vient d'être décrite constitue un amplificateur de gain plus ou moins 1, en utilisant des résistances R174 et R175 identiques, commandé par l'horloge retardée.

La structure avec deux interrupteurs analogiques 172, 173 permet de compenser le transfert de charges produit dans les interrupteurs.

Dans le cadre de l'invention, le filtre 190 relié à la sortie du détecteur synchrone 170 est de préférence un filtre du deuxième ordre. Il permet d'obtenir un signal propre avec une constante de temps relative faible dans la mesure où on dispose de peu de périodes (32) pour laisser le signal se stabiliser avant de faire la mesure.

De préférence, mais non limitativement, le filtre 190 est formé d'un amplificateur suiveur OP191 associé à deux RC.

Plus précisément encore, selon le mode de réalisation non limitatif illustré sur la figure 8, l'entrée non inverseuse de OP191 est reliée à la sortie du démodulateur 170 par l'intermédiaire d'une branche comprenant deux résistances R192, R193 en série. La même entrée non inverseuse de OP191 est reliée à la masse par un condensateur C194. Le point commun aux résistances R192, R193 est relié à l'entrée inverseuse de OP191 par un condensateur C195. La même entrée inverseuse de OP191 est rebouclée directement sur sa sortie.

La sortie du filtre 190 est disponible sur la sortie de OP191.

De préférence, la sortie du filtre 190 attaque un amplificateur 200 qui permet d'adapter le niveau du signal avant d'appliquer celui-ci à l'entrée d'un convertisseur analogique numérique. Un tel module amplificateur 200 peut faire l'objet de nombreux modes de réalisation. Selon le mode de réalisation illustré sur la figure 8, le module amplificateur 200 comprend un amplificateur opérationnel OP201 dont l'entrée non inverseuse est reliée à la sortie de OP191.

L'entrée inverseuse de OP201 est reliée à une référence Valim/2 par l'intermédiaire d'une branche comprenant en série une résistance fixe R202 et une résistance variable R203 permettant de régler le gain du module 200. L'entrée inverseuse de OP201 est rebouclée sur sa sortie par l'intermédiaire d'une branche de contre-réaction comprenant en parallèle une résistance R204 et un condensateur C205.

La sortie du circuit de détection 100 est disponible sur la sortie de OP201. Cette sortie de OP201 est par conséquent appliquée à un convertisseur analogique numérique.

Il peut s'agir par exemple d'un convertisseur AD7896 à 12 bits.

La sortie de ce convertisseur analogique numérique est ensuite adressée à un processeur qui effectue le calcul nécessaire pour l'exploitation du signal de mesure afin d'obtenir la grandeur d'entrée à mesurer, par exemple la position angulaire de la pièce mobile 40 par rapport à une référence fixe.

On rappelle qu'à titre d'exemple non limitatif, dans le cadre de l'exploitation d'un capteur capacitif du type représenté sur la figure 1, ce calcul consiste à :

- lire les quatre valeurs A, B, C et D schématisées sur la figure 4 obtenues successivement à la sortie de l'amplificateur de charges 160,
- calculer un pseudo-cosinus KC = B - A et un pseudo-sinus KS = D - C ,
- déterminer le secteur dans lequel se situe la pièce mobile 40 en fonction du signe de KC et KS, et
- calculer l'angle de la pièce mobile 40 dans le secteur considéré, par exemple avec des expressions du genre :

1-+-[(KS - KC) / (KC + KS)] ; 3 + [(KS + KC) / (KC - KS)] ; 5 + [(KS - KC) / (KC + KS)] et 7 + [(KS + KC) / (KC - KS)].

Les mesures sont effectuées lors des interruptions demandées par la logique programmable par le signal H.LEC.

Les valeurs A, B, C et D obtenues sont de préférence stockées dans un tampon et pour obtenir une bonne stabilité de l'affichage, on fait de préférence en entrée une moyenne glissante sur chacun des quatre niveaux A, la, C et D. Cette moyenne peut être faite sur quatre ou huit points par exemple.

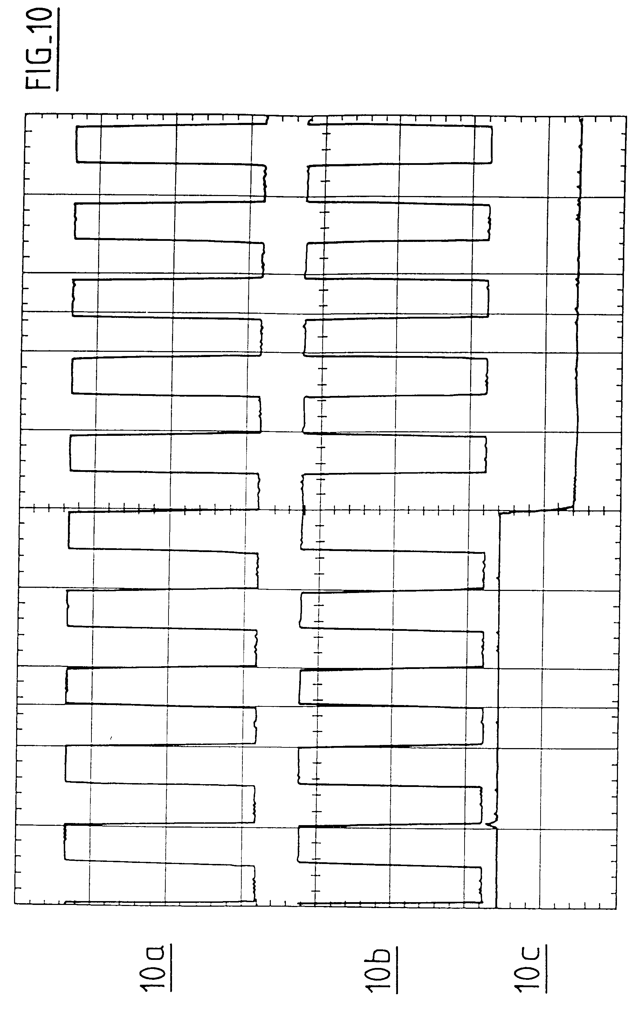

On a illustré sur les figures 10, 11, 12 et 13, différents signaux prélevés sur le circuit conforme à la présente invention. Plus précisément, sur la figure 10 :

- la figure 10a représente le signal d'attaque SECT1, généré à la sortie du module 140, d'un secteur 21 du capteur capacitif, à 100kHz,

- la figure 10b illustre le signal d'attaque SECT4 à 100kHz généré également à la sortie de la logique programmable 140 et appliqué au secteur 24 du capteur capacitif, et
- la figure 10c illustre le signal de synchronisation DEB généré par la logique programmable 140.

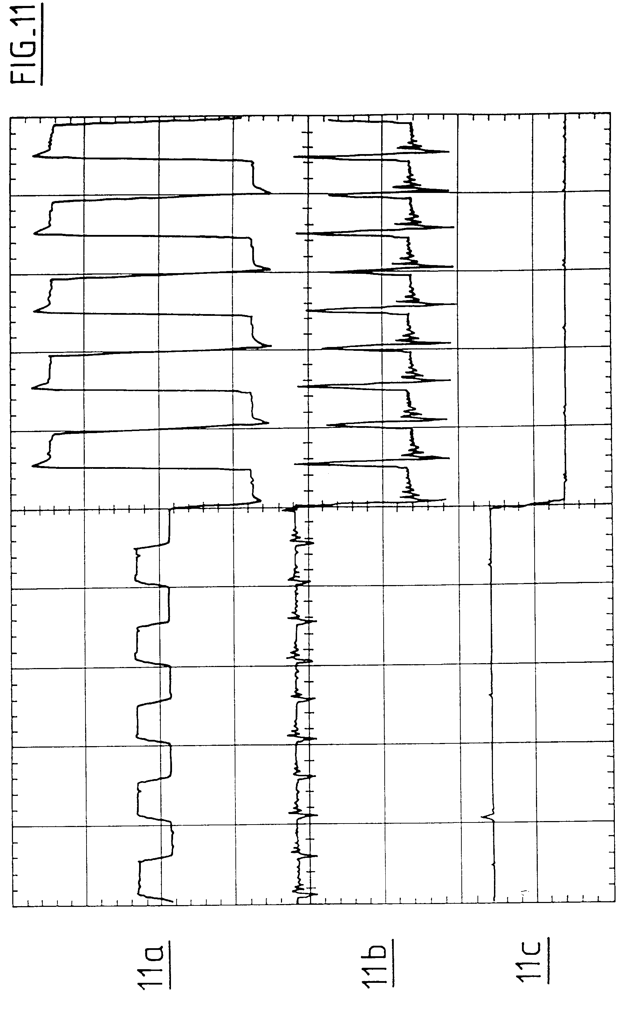

Sur la figure 11 :

- la figure 11a représente le signal de sortie de l'amplificateur de charge 160,
- la figure 11b représente le signal de sortie du démodulateur 170, et
- la figure 11c représente le signal DEB généré par la logique programmable 140.

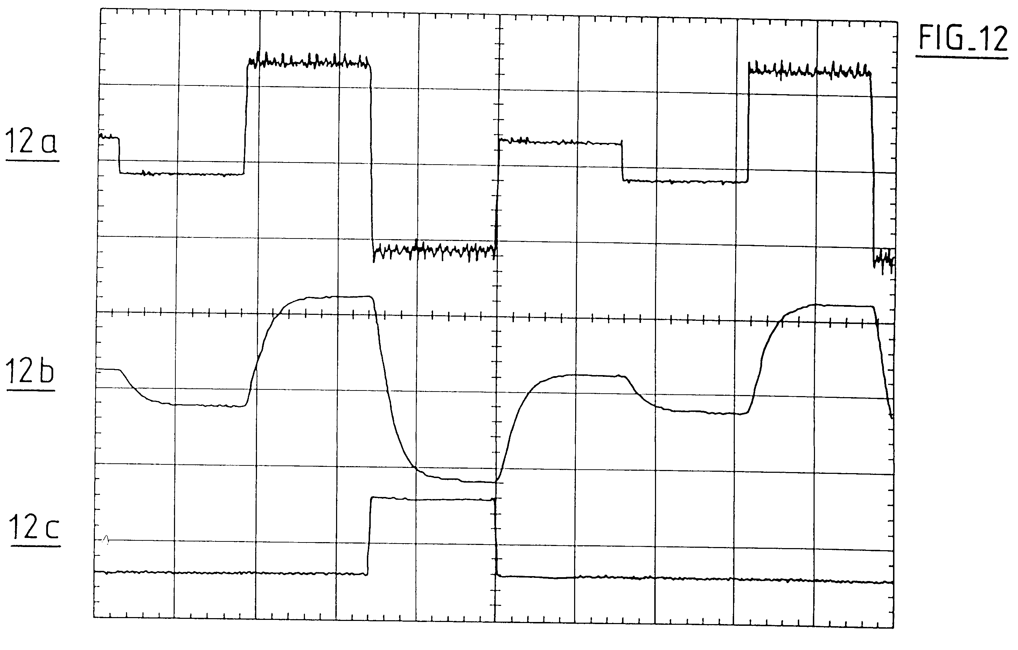

Sur la figure 12, dont la base de temps est réglée pour observer une mesure complète sur les quatre niveaux :

- la figure 12a représente sur un temps plus long que la figure 11, la sortie du module 170,
- la figure 12b représente le signal en sortie du filtre du second ordre 190, et
- la figure 12c représente le signal DEB2 généré par la logique programmable 140.

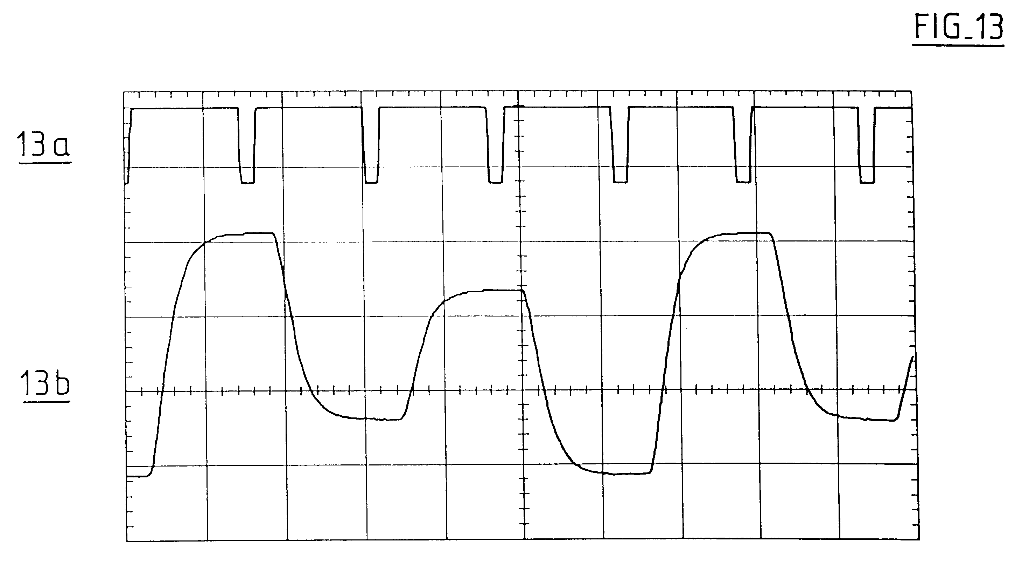

Sur la figure 13 :

- la figure 13a représente le signal H.LEC généré par la logique programmable 140 pour déclencher les mesures du convertisseur analogique numérique relié à la sortie du module 200, et
- la figure 13b représente le signal issu de ce module amplificateur 200 et appliqué à l'entrée du convertisseur.

Bien entendu l'invention n'est pas limitée aux modes de réalisation particuliers illustrés sur les figures.
En particulier :

- le second étage de l'amplificateur de charges 160, articulé autour de l'amplificateur opérationnel OP166 pourra être remplacé par un amplificateur plus rapide, par exemple de type vidéo ayant une bande passante supérieure à 10MHz,
- le démodulateur 170 formant détecteur synchrone constitué d'interrupteurs analogiques pourra être remplacé par un multiplieur,
- le filtre 190 du second ordre pourra être remplacé par un filtre du troisième ou quatrième ordre ayant un temps de stabilisation plus court.

Le dispositif de mesure capacitif conforme à la présente invention offre de nombreux avantages par rapport à la technique antérieure connue.
On indiquera notamment que :

- la détection synchrone permet d'obtenir un signal très stable, beaucoup moins sensible que l'état de la technique, aux parasites, et que cette stabilité du signal permet de diminuer la constante de temps du filtrage numérique,
- le circuit de la présente invention permet de multiplier le nombre de transferts de charges par un facteur égal au nombre de périodes du signal de commande à 100kHz pendant la durée de chacun des niveaux A, B, C et D, soit par exemple typiquement une multiplication par 32, ce qui est particulièrement avantageux pour une mesure fine de petites capacités,
- bonne réjection de tous les parasites grâce à la détection synchrone qui extrait la composante du signal à la bonne fréquence,
- fuites moins gênantes car la constante de temps de l'amplificateur de charges 160 est assez faible,
- impédance d'entrée plus faible donc meilleure insensibilité aux parasites, et
- liaison par capacités entre les étages ce qui évite des erreurs dues au décalage.

Les courbes illustrées sur la figure 2 représentant l'évolution des capacités en fonction de la rotation de la pièce mobile 40 sont des courbes théoriques qui supposent que les différents secteurs 21 à 28 sont rigoureusement adjacents. En pratique, le dessin de ces secteurs 21 à 28 sur l'armature fixe 20 impose forcément un espace d'isolation (typiquement de l'ordre de 0,4mm) entre les différents secteurs. Le processeur peut être adapté pour tenir compte des décalages résultant sur les courbes d'évolution des capacités pour calculer la grandeur recherchée.
Les capacités mesurées étant généralement faibles (quelques dixièmes de pF) toute diaphonie apparaissant entre les signaux des secteurs 21 à 28 et l'entrée de l'amplificateur de charges 160 crée une erreur importante sur l'angle.
Il est donc nécessaire de blinder le signal de l'électrode réceptrice 30, vers l'amplificateur de charges 160 et d'éviter tout couplage direct des signaux de commande de secteurs 21 à 28 avec l'amplificateur.

Seules les fuites vers le point milieu ne créent pas d'erreur. Les fuites vers la masse sont plus probables et créent une déformation non symétrique des signaux susceptibles de provoquer une erreur après détection.

Pour que les fuites vers la masse n'aient pas d'influence, il est donc recommandé d'utiliser une alimentation négative pour alimenter les amplificateurs en symétrie.

Le découpage rapide du démodulateur 170 est susceptible de provoquer le transfert de charges fréquent entre le signal de commande des interrupteurs analogiques 172, 173 et le signal utile de sortie. Pour limiter ce type d'erreur, il convient d'utiliser un montage comprenant deux interrupteurs analogiques 172, 173 commandés en opposition, comme illustré sur les figures annexées, pour que les charges transférées s'équilibrent et choisir des interrupteurs analogiques 172, 173 ayant une faible capacité.

La vitesse de balayage et les éventuels dépassements sont suceptibles de créer de la distorsion. En pratique, c'est surtout la dissymétrie de celle-ci qui peut provoquer des erreurs sur l'angle. Il est donc souhaitable d'utiliser des amplificateurs rapides pour passer un carré à 100kHz sans trop de distorsion (bande passante supérieure à 1MHz).

Les étages analogiques doivent avoir une bonne linéarité.

Les erreurs d'offset sont éliminées grâce aux liaisons capacitives entre les étages avant détection et la soustraction numérique en début de calcul pour les étages suivants.

Les défauts de discontinuité ou de non linéarité lors du passage entre les différents secteurs peuvent être compensés par calcul ou par une table de correction dans la mesure où ces défauts sont connus et répétitifs.

Bien entendu la présente invention n'est pas limitée au mode de réalisation particulier qui vient d'être décrit, mais s'étend à toute variante conforme à son esprit.

Par ailleurs, comme on l'a évoqué précédemment, la présente invention n'est pas limitée à un capteur comprenant quatre capacités variables, et donc un nombre de secteurs 20 multiple de 4. L'invention pourra s'étendre à un capteur comprenant i capacités variables formées à partir d'un nombre de secteurs 20 multiple de i.

## Revendications

1. Dispositif de mesure capacitif comprenant un capteur capacitif (10) comportant deux ensembles d'électrodes (20, 30) séparés par un milieu (40) de propriétés diélectriques évolutives en fonction d'une grandeur à mesurer et un système électronique (100) comportant des moyens de commande (110, 130, 140) aptes à appliquer des signaux électriques contrôlés d'entrée (SECT1, SECT2, SECT3, SECT4) sur les électrodes (20) et des moyens de détection (150, 160, 170, 180, 190, 200) aptes à mesurer un signal électrique de sortie résultant et à exploiter celui-ci pour déterminer une valeur représentative de ladite grandeur à mesurer, caractérisé par le fait que les moyens de commande (110, 130, 140) sont conçus pour générer des signaux électriques contrôlés découpés par un signal d'horloge et par le fait que les moyens de détection (150 à 200) sont conçus pour opérer une détection synchrone avec le signal d'horloge.

2. Dispositif selon la revendication 1, caractérisé par le fait que le signal d'horloge a une fréquence de l'ordre de 100kHz.

3. Dispositif selon l'une des revendications 1 ou 2, caractérisé par le fait que l'un des ensembles d'électrodes (20) comprend plusieurs électrodes (21 à 28) et que les moyens de commande (140) sont adaptés pour attaquer certaines choisies de ces électrodes par des signaux en opposition de phase à la fréquence du signal d'horloge.

4. Dispositif selon l'une des revendications 1 à 3, caractérisé par le fait que les deux ensembles d'électrodes (20, 30) définissent i capacités variables, et les moyens de commande (140) sont adaptés pour générer i signaux (SECTi) divisés en cycles de j périodes de temps, chacun des i signaux étant constitués de créneaux ou impulsions en phase ou en opposition de phase avec un signal d'horloge, la phase de l'un au moins des signaux étant inversée d'une période j à la période suivante.

5. Dispositif selon l'une des revendications 1 à 4, caractérisé par le fait que les eux ensembles d'électrodes (20, 30) définissent quatre capacités variables.

6. Dispositif selon la revendication 5, caractérisé par le fait que les moyens de commande (140) génèrent quatre signaux (SECT1, SECT2, SECT3, SECT4) constitués chacun de cycles divises en quatre temps (T1, T2, T3 et T4), la phase de l'un au moins des signaux étant alternée, d'un temps à l'autre, et pendant chacun de ces quatre temps (T1, T2, T3 et T4), deux des signaux sont en phase avec le signal d'horloge, tandis que les deux autres signaux sont en opposition de phase avec le signal d'horloge.

7. Dispositif selon l'une des revendications 1 à 6, caractérisé par le fait que les moyens de commande (140) génèrent quatre signaux (SECT1, SECT2, SECT3 et SECT4) constitués chacun de cycles divisés en quatre temps (T1, T2, T3 et T4), tels que :

   - le premier temps T1, les signaux SECT1 et SECT2 correspondent à des créneaux ou impulsions identiques au signal d'horloge et en phase avec celui-ci, tandis que les signaux SECT3 et SECT4 correspondent à des créneaux ou impulsions en opposition de phase avec le signal d'horloge,
   - pendant le second temps T2, les signaux SECT1 et SECT2 sont en opposition de phase avec le signal d'horloge, tandis que les signaux SECT3 et SECT4 sont en phase avec le signal d'horloge,
   - pendant le troisième temps T3, les signaux SECT2 et SECT3 sont en phase avec le signal d'horloge, tandis que les signaux SECT1 et SECT4 sont en opposition de phase avec le signal d'horloge, et
   - pendant le quatrième temps T4, les signaux SECT1 et SECT4 sont en phase avec le signal d'horloge, tandis que les signaux SECT2 et SECT3 sont en opposition de phase avec le signal d'horloge.

8. Dispositif selon l'une des revendications 1 à 7, caractérisé par le fait que les moyens de détection (170) sont adaptés pour opérer une multiplication du signal de mesure issu de l'un des ensembles d'électrodes (30), par le signal d'horloge.

9. Dispositif selon l'une des revendications 1 à 8,caractérisé par le fait que les moyens de détection (170) comprennent un amplificateur de gain alternativement positif et négatif commandé par le signal d'horloge.

10. Dispositif selon la revendication 9, caractérisé par le fait que l'amplificateur de gain alternativement positif et négatif à des gains respectivement de +1 et -1.

11. Dispositif selon l'une des revendications 9 ou 10, caractérisé par le fait que l'amplificateur de gain- alternativement positif et négatif est formé par la combinaison d'un amplificateur opérationnel (OP171) et deux interrupteurs analogiques (172, 173) dont les cycles d'ouverture et de fermeture sont pilotés par des signaux respectifs en opposition de phase de fréquence égale au signal d'horloge.

12. Dispositif selon la revendication 11, caractérisé par le fait que les entrées des interrupteurs analogiques (172, 173) reçoivent respectivement un signal représentatif de la sortie du capteur capacitif et une valeur de référence, tandis que leurs sorties sont reliées en commun à une entrée de l'amplificateur opérationnel.

13. Dispositif selon la revendication 11 ou 12, caractérisé par le fait que les entrées des interrupteurs analogiques (172, 173) sont reliées respectivement à la sortie d'un amplificateur de charge (160) et à une borne de référence.

14. Dispositif selon l'une des revendications 1 à 13, caractérisé par le fait qu'un amplificateur de charge est intercalé entre la sortie (30) du capteur capacitif (10) et l'entrée du détecteur synchrone (170).

15. Dispositif selon la revendication 14, caractérisé par le fait que l'amplificateur de charge est formé de deux amplificateurs montés en cascade.

16. Dispositif selon la revendication 15, caractérisé par le fait que le premier étage amplificateur comprend un amplificateur opérationnel (OP161) muni d'une contre-réaction formée en parallèle d'un condensateur (C164) et d'une résistance (R163), tandis que le second étage amplificateur comprend un amplificateur opérationnel (OP166) muni d'une résistance de contre-réaction (R168).

17. Dispositif selon l'une des revendications 1 à 14, caractérisé par le fait qu'un filtre (190) est relié à la sortie du détecteur synchrone (170).

18. Dispositif selon la revendication 17, caractérisé par le fait que le filtre (190) est un filtre passe-bas du second ordre.

19. Dispositif selon l'une des revendications 1 à 18, caractérisé par le fait qu'il comprend un déphaseur (150) en amont de l'entrée de commande du détecteur synchrone (170).

20. Dispositif selon la revendication 19, caractérisé par le fait que le déphaseur (150) génère deux signaux pilotes en opposition de phase à partir du signal d'horloge.

21. Dispositif selon l'une des revendications 1 à 20, caractérisé par le fait qu'il comprend deux ensembles d'électrodes constitués, l'un d'une pluralité d'électrodes isolées électriquement et juxtaposées, l'autre d'une électrode placée en regard de ladite pluralité d'électrodes.

22. Dispositif selon l'une des revendications 1 à 21, caractérisé par le fait qu'il comprend deux ensembles d'électrodes constitués, l'un d'une pluralité d'électrodes isolées électriquement et superposées verticalement, l'autre d'une électrode placée en regard de ladite pluralité d'électrodes, placée dans un réservoir de liquide à mesurer, avec possibilité de libre circulation du liquide entre lesdits ensembles d'électrodes.

23. Dispositif selon la revendication 22, caractérisé par le fait que le capteur capacitif est placé dans un réservoir de carburant de véhicule automobile.

24. Dispositif selon l'une des revendications 1 à 20, caractérisé par le fait que pour la mesure d'un angle de rotation, le capteur capacitif (10) comprend deux armatures fixes (20, 30) et une pièce (40) mobile à rotation, une première armature fixe (20) comprenant plusieurs secteurs angulaires (21, 28) recevant des signaux de commande contrôlés (SECT1, SECT2, SECT3, SECT4) découpés par un signal d'horloge, la seconde armature fixe (30) étant circulaire et recouvrant les secteurs (21, 28) de la première armature, et la pièce mobile (40) étant entraînée à rotation entre les deux armatures fixes (20, 30) selon un angle à mesurer, tandis que les moyens de détection (100) prélèvent le signal sur la seconde armature fixe (30).

25. Dispositif selon la revendication 24, caractérisé par le fait que lesdits secteurs angulaires (21-28) sont équirépartis autour de l'axe de rotation.

26. Dispositif selon l'une des revendications 24 ou 25, caractérisé par le fait que les secteurs (21-28) sont reliés par paires diamétralement opposées.

27. Dispositif selon l'une des revendications 24 à 26, caractérisé par le fait qu'il comprend huit secteurs (21-28) reliés deux à deux par paires diamétralement opposées.

28. Dispositif selon l'une des revendications 24 à 27, caractérisé par le fait que la seconde armature (30) est entourée d'un anneau de garde.

29. Dispositif selon l'une des revendications 21 à 28, caractérisé par le fait que la pièce mobile (40) comprend au moins un secteur apte à rouvrir plusieurs secteurs de la première armature, par exemple deux secteurs de celle-ci.

30. Dispositif selon l'une des revendications 24 à 29, caractérisé par le fait que la pièce mobile (40) comprend deux secteurs diamétralement opposés (42, 44) couvrant chacun deux secteurs de la première armature.

31. Dispositif selon l'une des revendications 24 à 30, caractérisé par le fait que le pièce mobile (40) est réalisée en matériau électriquement conducteur.

32. Dispositif selon l'une des revendications 24 à 30, caractérisé par le fait que la pièce mobile (40) est réalisée en matériau électriquement isolant.

33. Dispositif selon l'une des revendications 1 à 32, caractérisé par le fait que les moyens de détection (100) sont adaptés pour mémoriser les signaux issus d'un ensemble d'électrode (30) après application d'une séquence de signaux électriques contrôlés et découpés par un signal d'horloge, calculer un pseudo-cosinus et pseudo-sinus sur la base des valeurs mémorisées, déterminer le secteur dans lequel se situe la pièce mobile (40) sur la base du signe du pseudo-cosinus et du pseudo-sinus et calculer l'angle dans le secteur à l'aide de fonctions mettant en oeuvre le pseudo-cosinus et le pseudo-sinus.

34. Dispositif selon l'une des revendications 1 à 33, caractérisé par le fait que les moyens de détection sont adaptés pour :

- lire quatre valeurs A, B, C et D obtenues successivement à la sortie d'un amplificateur (160),
- calculer un pseudo-cosinus $KC = B - A$ et un pseudo-sinus $KS = D-C$,
- déterminer le secteur dans lequel se situe une pièce mobile (40) en fonction du signe de KC et KS, et
- calculer la position de la pièce mobile (40) dans le secteur considéré, par exemple avec des expressions du

genre :

1 + [(KS-KC) / (KC+KS)] ; 3 + [(KS-KC) / (KC+KS)] ; 5 + [(KS-KC) / (KC+KS)] et 7 + [(KS-KC) / (KC+KS)].

35. Dispositif selon l'une des revendications 1 à 34, caractérisé par le fait que le signal d'horloge est généré par un circuit oscillateur (110) qui comprend un amplificateur opérationnel (OP111) monté en trigger avec un réseau RC.

36. Dispositif selon la revendication 35, caractérisé par le fait que l'entrée inverseuse de l'amplificateur opérationnel (OP111) est reliée, d'une part à la masse par un condensateur (C112) et d'autre part à sa sortie par deux résistances séries (R113 et R114) dont l'une au moins réglable pour le réglage de la fréquence d'oscillation, l'entrée non inverseuse de l'amplificateur opérationnel (OP111) étant reliée, d'une part à la masse par une résistance (R115) et d'autre part à sa sortie par une résistance de contre-réaction (R116).

37. Dispositif selon l'une des revendications 1 à 36, caractérisé par le fait qu'il comprend un module (180) générant une masse décalée, pour l'amplificateur (160) relié à la sortie du capteur capacitif et pour un démodulateur (170) des moyens de détection.

38. Dispositif selon l'une des revendications 1 à 8, caractérisé par le fait que le démodulateur assurant la détection synchrone comprend un interrupteur dont les cycles d'ouverture et de fermeture sont pilotés par le signal d'horloge.

FIG.1

FIG.2

FIG.3

T₁ → $T_1$
T₂ → $T_2$
T₃ → $T_3$
T₄ → $T_4$

Charge

$K_C$

$+5$

$K_S$

$0$

Temps

FIG_4

Angle $\varphi$

| $0$ | $\pi/4$ | $\pi/2$ | $3\pi/4$ | $\pi$ | Radians |
|---|---|---|---|---|---|
| $0$ | $45$ | $90$ | $135$ | $180$ | Degrés |

$2.C0+2.\Delta C$

$2.C0+\Delta C$

$2.C0$

$0$

$C_1+C_2$

$C_3+C_4$

FIG_5a

$2.C0+2.\Delta C$

$2.C0+\Delta C$

$2.C0$

$0$

$C_2+C_3$

$C_1+C_4$

FIG_5b

Angle $\varphi$

| $0$ | $\pi/4$ | $\pi/2$ | $3\pi/4$ | $\pi$ | Radians |
|---|---|---|---|---|---|
| $0$ | $45$ | $90$ | $135$ | $180$ | Degrés |

$2.\Delta C.\Delta Ve/Ci$

$K_C$

$K_S$

$0$

$-2.\Delta C.\Delta Ve/Ci$

FIG_6

$+1$

$2.\Delta C.\Delta Ve/Ci$

$K_C$

$K_S$

$0$

$-2.\Delta C.\Delta Ve/Ci$

$-1$

Angle $\varphi$   $0$

$180°$

FIG_7

FIG_8

EP 0 933 618 A1

FIG_9

EP 0 933 618 A1

FIG_10

10 a

10 b

10 c

EP 0 933 618 A1

FIG.11

11a

11b

11c

EP 0 933 618 A1

FIG_12

12 a

12 b

12 c

EP 0 933 618 A1

FIG.13

13a

13b

EP 0 933 618 A1

**Office européen des brevets**

**RAPPORT DE RECHERCHE EUROPEENNE**

Numéro de la demande

EP 98 40 0199

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| Y | BRASSEUR G: "A ROBUST CAPACITIVE ANGULAR POSITION SENSOR" JOINT PROCEEDINGS OF THE IEEE INTRUMENTATION AND MEASUREMENT TECHNOLOGY CONFERENCE AND THE IMEKO TECHNICAL COMMITTEE 7, BRUSSELS, JUNE 4 - 6, 1996, vol. 2, 4 juin 1996, INSTITUTE OF ELECTRICAL AND ELECTRONICS ENGINEERS, pages 1081-1086, XP000642749 * page 1084, colonne de gauche, ligne 1 - page 1086, colonne de droite, ligne 11; figure 11 * --- | 1,5,17, 19,20, 24-27, 31-33,38 | G01D5/241 G01B7/30 |
| Y | US 5 172 065 A (WALLRAFEN) 15 décembre 1992 * colonne 2, ligne 51 - colonne 3, ligne 38 * --- | 1,5,17, 19,20, 24-27, 31-33,38 | |
| D,A | US 3 916 689 A (DONELLY) 4 novembre 1975 * abrégé * --- | 23 | DOMAINES TECHNIQUES RECHERCHES (Int.Cl.6) |
| D,A | EP 0 551 066 A (BRASSEUR) 14 juillet 1993 * colonne 4, ligne 25 - ligne 31; figures 1,2 * --- | 28 | G01D G01B |
| E | FR 2 752 052 A (MAGNETI MARELLI FRANCE S.A.) 6 février 1998 * le document en entier * ----- | 1-38 | |

Le présent rapport a été établi pour toutes les revendications

| Lieu de la recherche | Date d'achèvement de la recherche | Examinateur |
|---|---|---|
| LA HAYE | 11 juin 1998 | Lut, K |

EPO FORM 1503 03 82 (P04C02)

**EP 0 933 618 A1**

## ANNEXE AU RAPPORT DE RECHERCHE EUROPEENNE
## RELATIF A LA DEMANDE DE BREVET EUROPEEN NO.

EP 98 40 0199

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

11-06-1998

| Document brevet cité au rapport de recherche | Date de publication | Membre(s) de la famille de brevet(s) | | Date de publication |
|---|---|---|---|---|
| US 5172065 A | 15-12-1992 | DE | 4001814 A | 25-07-1991 |
| | | AU | 630744 B | 05-11-1992 |
| | | AU | 6369690 A | 25-07-1991 |
| | | DE | 59010073 D | 29-02-1996 |
| | | EP | 0438634 A | 31-07-1991 |
| US 3916689 A | 04-11-1975 | CA | 1025081 A | 24-01-1978 |
| | | DE | 2430186 A | 16-01-1975 |
| | | FR | 2234555 A | 17-01-1975 |
| | | GB | 1479752 A | 13-07-1977 |
| EP 551066 A | 14-07-1993 | AT | 398245 B | 25-10-1994 |
| | | US | 5598153 A | 28-01-1997 |
| | | AT | 257491 A | 15-02-1994 |
| | | DE | 59207130 D | 17-10-1996 |
| FR 2752052 A | 06-02-1998 | AUCUN | | |

EPO FORM P0460

Pour tout renseignement concernant cette annexe : voir Journal Officiel de l'Office européen des brevets. No.12/82